# EUROPEAN PATENT APPLICATION

(11) **EP 4 641 861 A1**
(43) Date of publication of application: **29.10.2025**
(21) Application number: 24171891.5
(22) Date of filing: 23.04.2024
(51) Int. Cl.: H02J 3/18, C25B 1/04, C25B 15/02, H02J 3/38, H02J 3/50, H02J 15/00

(54) **CONTROLLING AN ELECTROLYZING PLANT**

(71) Applicant: Siemens Energy Global GmbH & Co. KG, 81739 München (DE)
(72) Inventor: Craciun, Bogdan, 91052 Erlangen (DE); Langenberg, Nils, 90461 Nürnberg (DE); Loku, Fisnik, 90768 Fürth (DE); Bendig, Marvin, 90513 Zirndorf (DE)

(57) **Abstract**

The invention relates to a method for controlling an electrolyzing plant (10) having an electrolyzing device (26), wherein the method comprises:
- converting an alternating voltage of an electric power network (12) into an electrolyzing voltage, wherein converting is affected by an electric converter (22), which electric converter operates in a rectifying modus,
- subjecting the electrolyzing device to a polarization voltage for a predetermined period at off-time, wherein the polarization voltage is provided by a polarization energy source (30),
- detecting the alternating voltage with a voltage sensor (36) providing a sensor signal, and
- comparing the sensor signal with at least one reference value,
- dependent on a comparing result, subjecting the electrolyzing device and the electric converter to the polarization voltage, and
- operating the electric converter in an alternating modus, wherein electric power of the polarization energy source is supplied to the electric converter in order to allow the electric converter supplying reactive power to the electric power network.

## Description

The invention relates to method for controlling an electrolyzing plant having at least one electrolyzing device, especially for electrolyzing of water by providing an electrolyzing process, wherein the method comprises: converting an alternating voltage of an electric power network into an electrolyzing voltage for supplying the at least one electrolyzing device with electric power of the electric power network, wherein converting is affected by an electric converter connected with the electric power network, which electric converter operates in a rectifying modus during an intended electrolyzing operation of the electrolyzing plant, subjecting the at least one electrolyzing device to a polarization voltage for a predetermined period at off-time of the intended electrolyzing operation, wherein the polarization voltage is provided by a polarization energy source of the electrolyzing plant, detecting the alternating voltage with a voltage sensor providing a sensor signal, and comparing the sensor signal with at least one reference value. Moreover, the invention relates to a control apparatus for an electrolyzing plant having at least one electrolyzing device, especially for electrolyzing of water by providing an electrolyzing process, wherein the control apparatus is configured to: control an electric converter of the electrolyzing plant, wherein the electric converter may be connected with the electric power network, with regard to conversion an alternating voltage of the electric power network into an electrolyzing voltage for supplying the at least one electrolyzing device with electric power of the electric power network, wherein the electric converter is configured to operate in a rectifying modus during an intended electrolyzing operation of the electrolyzing plant, cause subjecting the at least one electrolyzing device to a polarization voltage at off-time of the intended electrolyzing operation for a predetermined period, wherein the polarization voltage is provided by a polarization energy source of the electrolyzing plant, cause detecting the alternating voltage with a voltage sensor providing a sensor signal, and cause comparing the sensor signal with at least one reference value. Finally, the invention relates to an electrolyzing plant having: at least one electrolyzing device, especially for electrolyzing of water by providing an electrolyzing process, an electric converter that may be connected with an electric power network using an alternating voltage, wherein electric converter is configured to convert the alternating voltage of the electric power network into an electrolyzing voltage for supplying the at least one electrolyzing device with electric power of the electric power network, wherein the electric converter is configured to operate in a rectifying modus during an intended electrolyzing operation of the electrolyzing plant, a polarization energy source configured to provide a polarization voltage to the at least one electrolyzing device at off-time of the intended electrolyzing operation for a predetermined period, a voltage sensor for detecting the alternating voltage of the electric power network and for providing a sensor signal, and a control apparatus at least configured to control the electric converter, and to compare the sensor signal with at least one reference value.

Methods for controlling electrolyzing plants, for instance, for producing hydrogen and oxygen by electrolyzing of water in an electrolyzing process, control apparatuses for controlling electrolyzing plants, and electrolyzing plants are well-known in the state of the art, which is why specific documents as a reference need not to be cited. The before-mentioned objects relate to providing an electrolyzing process which is used for producing hydrogen and oxygen by electrolyzing of water. The following considerations can be also applied to such electrolyzing processes, respectively.

Electrolysis itself is provided by an electrolyzing device of the electrolyzing plant, which, in turn, comprises usually plural electrolyzing cells. A group of the electrolyzing cells of a specific electrolyzing device may be arranged to form an electrolyzing module. One or more electrolyzing modules may form the electrolyzing device.

The electrolyzing cells of a specific electrolyzing device or a specific electrolyzing module, respectively, may be electrically connected at least partially in series or in parallel. An electric connection of the electrolyzing device may be provided such that at least some, or perhaps all, of the electrolyzing cells are subjected to a respective portion of a DC voltage subjected to the electrolyzing device. The operation of generic electrolyzing cells as well as electrolyzing devices, for instance, for the use for electrolyzing of water, are well-known to those skilled in the art, such as, for instance, disclosed by DE 197 29 529 C1. The generic function of electrolysis, especially electrolysis of water, is also well-known to those skilled in the art which is why it is refrained from further detailed explanation in this specification.

An electrolyzing device has at least one single electrolyzing cell. However, common designs of electrolyzing devices teach that a specific electrolyzing device has a plurality of electrolyzing cells. During the electrolyzing process, when the electrolyzing device is subjected to the suited electrolyzing voltage which is usually a DC voltage, the electrolyzing device responds with an electrolyzing DC current flow. With regard to the electrolyzing of water, during the electrolyzing process, water is consumed, and hydrogen and oxygen are produced. A value of the DC voltage usually may depend on the number of electrolyzing cells being connected in series inside of the electrolyzing device. The electrolyzing DC current flow may depend on the number of electrolyzing cells being connected in parallel as well as the specific design of each of the electrolyzing cells.

Usually, an electrolyzing plant requires a respective high power supply during the electrolyzing process. The conditions for establishing the electrolyzing process are not easy to control which is why it is usually an intention of operators to maintain specific processing conditions and to avoid large amendments of these conditions. Therefore, controlling of the electric power network should consider these requirements for supplying the electrolyzing plant with electric energy, on the one hand. On the other hand, network requirements of the electric power network need to be also considered, such as, for example, harmonics, power factor, low voltage condition, high voltage condition, and/or the like.

In this regard, it should be noted that the electrolyzing plant usually has a rectifying device providing an electrical coupling between the electric power network and the electrolyzing device. The electrolyzing device need to be supplied with DC voltage, whereas, usually, the electric power network provides AC voltage, especially, a three phase AC voltage. Therefore, the electrolyzing plant has at least one rectifying device which receives the AC voltage and, in response, provides the DC voltage. Moreover, the rectifying device may include one or more transformers, in order to transform the AC voltage before rectifying.

For the purpose of rectifying as such, the rectifying device may have thyristors or diodes, respectively. If thyristors are provided, they can be controlled in order to adjust a specific electric power to be supplied to the electrolyzing device.

It should be further considered that the number of installed electrolyzing plants and existing electric power networks continuously increases. With regard to the global warming range, it is preferred to accelerate the production of green hydrogen. Consequently, electric power network operators consider to define requirements for the connection or large electrolyzing plants in existing electric power networks. Some of the basic requirements that are defined relate to the fault-right-through (FRT) requirements, which define operation areas, when an electrolyzing plant needs to stay connected at a respective electric power network, and operation areas where the electrolyzing plants are allowed being disconnected from the electric power network. Additionally, initial specifications and requirements such as the power factor are defined as well. At least some of the new requirements for load systems further consider requirements for existing photovoltaic farms and wind farms.

Usually, the electrolyzing device requires a high DC current, for instance, in a range of about 7 kA through about 10 kA. This clarifies why the rectifying device usually is based on thyristors, for instance, a B6C configuration. Such a rectifying device is preferable due to its efficiency and its reliability. However, a thyristor-based rectifying device is not suited to control sufficiently a value of the reactive current on the AC side, for instance, if capacitive reactive current was required.

The situation may become even more serious when considering a trend that most of the countries of the world are replacing existing conventional power plants by renewable energy sources which further decreases a strength and stability of the electric power network.

In case of system perturbations of the electric power network, such as, for instance, a voltage drop, a brownout, an overvoltage condition, or the like, supporting capabilities for stabilizing the electric power network by photovoltaic farms, wind farms and/or the like may not be sufficient to ensure a stable operation of the electric power network. In this regard, it is considered to provide new requirements for electrolyzing plants which may make compulsory not only reactive power support requirements but also injections of reactive current into the electric power network as well.

Moreover, large flexible loads connected to the electric power network, or grid, respectively, in particular electrolyzing plants, may cause a substantial effect on the security and/or stability of the operation of the power supply network, especially, in case that the operation of the electrolyzing plant be not flexible with requirements regarding the operation of the power supply network. For example, during power supply network faults caused by different reasons, the alternating voltage may differ from a rated value, however, the electrolyzing plant shall stay connected and permanent disconnection shall be avoided.

For this reason, flexible load plants such as large-scale electrolyzing plants need to stay connected during a voltage fault and continue their operation after the fault is cleared. For this purpose, the electrolyzing plants need to be able to ride through faults and, may, for instance, contribute with specific services that can enhance the grid stability.

This shows that providing electric power network services such as FRT and reactive current injection during fault could allow enabling more installation of large-scale electrolyzing plants resulting in more installed capacities and harmonization with the grid operation. So far, the installed capacities of electrolyzing plants are modest and not exceeding several MW in size, but with the present desire with regard to decarbonization policies in different sectors, large-scale electrolyzing plants are more and more expected to be added to the power supply network. This means that the entire functionality of the FRT needs to be addressed by the electrolyzing plants. In this regard, electric power network operators already have drafted some FRT requirements on the connection with the power supply network.

The FRT requirement may be addressed by an electric converter such as a conventional thyristor-based system providing a common blocking operation mode of the thyristors and the resuming the power supply operation again, once the fault is cleared. The same strategy may be applied by an electric converter based on an IGBT-based technology allowing the power supply riding through the fault.

In both cases detailed before, only the ride through the fault may be achieved, however, reactive current injection may not be delivered to the electric power network, especially, in extreme FRT scenarios. This may include a scenario, where the electric power network provides a brown-out or a black-out. Moreover, injecting reactive power into the electric power network during a fault may cause magnetic components such as inductors and transformers to keep their magnetization, wherein stabilizing of the alternating voltage may be faster, once the fault is cleared.

In this regard, it is an object of the invention to provide a method, an apparatus, as well as an electrolyzing plant which may further support stable operation of the electric power network.

As a solution, a method, an apparatus, and an electrolyzing plant according to the independent claims are proposed.

Exemplary embodiments can be further derived from the features of the dependent claims.

With regard to a generic method, it is proposed that the method includes the steps of, dependent on a comparing result, subjecting the at least one electrolyzing device and the electric converter to the polarization voltage, and, operating the electric converter in an alternating modus, wherein, in the alternating modus, electric power of the polarization energy source is supplied to the electric converter in order to allow the electric converter supplying reactive power to the electric power network by the operation of the electric converter.

With regard to a generic control apparatus, it is proposed that the control apparatus is further configured to cause, dependent on a comparing result, subjecting the at least one electrolyzing device and the electric converter to the polarization voltage, and, cause the electric converter operating in an alternating modus, wherein, in the alternating modus, electric power of the polarization energy source is supplied to the electric converter in order to allow the electric converter supplying reactive power to the electric power network by the operation of the electric converter.

With regard to a generic electrolyzing plant, it is proposed that the electrolyzing plant has a control apparatus according to the invention.

Generally, the invention is at least based on the consideration that energy of the polarization energy source can be used to stabilize the electric power network during a FRT. In this regard, it should be noted, that a duration for a FRT usually extents over less than one minute, for example, less than 10 s, especially, less than 3 s. The invention teaches that electric energy of the polarization energy source can be used to be supplied to the electric converter in order to enable the electric converter to supply reactive energy, power, or current, respectively, to the electric power network during a FRT. During the FRT, it may be possible that the rectifying operation of the electric converter may be maintained. This allows stabilizing the electric power network, especially with regard to the alternating voltage, in order to reduce impacts that may be caused by a fault of the electric power network, such as, for example, a brown-out, a black-out, an overvoltage-event and/or the like. At the same time, tripping of the energy supply for the electrolyzing plant may be avoided. For the purpose of the invention, the polarization energy source may present a specific predetermined amount of electric energy can be provided at a specific amount of electric power. The electric power may be determined or limited by the electric converter, especially, its design. According to the invention, the electrolyzing plant is adapted such that it may provide electric power to the electric power network in case of a fault in order to support the electric power network. Usually, such a support needs to be necessary only for the predetermined duration of the event. In case of the critical event, the operation of the electric converter is operated in an alternating modus different from the usual rectifying modus. In the rectifying modus, the electric converter may be controlled such that it provides rectification of the energy supplied from the electric power network at a power factor that, for example, is high, especially, close to 1. In the alternating modus, the electric converter may be controlled such that the power factor is reduced, especially, considerably smaller than 1. In this regard, it is possible to provide a specific predetermined amount of reactive power to the electric power network. Especially, the operation of the electric converter may be amended such that the current consumed from the electric power network may be more phase-shifted with regard to the alternating voltage of the electric power network in order to provide a specific amount of reactive current or reactive power, respectively. It should be noted that, at the same time, the rectifying operation of the converter is still maintained. It should also be noted that, in the alternating modus, electric energy of the polarization energy source may be especially used for operating the electric converter in the alternating modus, for instance, with regard to its switching elements and the switching characteristics. It may be not necessary to supply electric energy of the polarization energy source direct to the electric power network. This is a substantial advantage with regard to thyristor-based converters, which are usually only operable in a very limited rectifying modus, where the power factor can be affected only in a very limited way by a firing angle, wherein the rectified power is substantially affected at the same time.

Especially, an amount and/or a limit for an injection of electric energy from the electrolyzing plant to the electric power network may be analyzed separately for each specific case. In this regard, providing the at least one electrolyzing device with the polarization voltage may be optional. Especially, the amount of electric energy provided from the polarization energy source and supplied to the electric converter may depend on conditions required necessary for maintaining the polarization voltage at the at least one electrolyzing device during the FRT. In this regard, the control apparatus may control the operation of the electrolyzing plant such that the critical situation of the electric power network can be reduced.

The invention teaches that the alternating voltage of the electric power network is detected by a voltage sensor, which provides a respective sensor signal. The sensor signal may be an analog signal or a digital signal. The sensor signal is compared with at least one reference value providing a comparing result. Comparing can be provided by the control apparatus, which may have, for this purpose, a comparing apparatus. The comparing apparatus may be a component of the control apparatus or at least of the electrolyzing plant, especially, of the at least one electrolyzing device. The comparing apparatus may provide the comparing result. For the purpose of comparing, the sensor signal may be processed such that the rms-(root mean square)-value, an amplitude value, an average value or the like may be the result.

Depending on the comparing result, the at least one electrolyzing device may be subjected to the polarization voltage. However, this step may be optional and depend on the necessity of providing the polarization voltage during the period of the FRT to the at least one electrolyzing device. However, it is mandatory, that the polarization voltage is provided to the electric converter. In this regard, the electric converter is operated in the alternating modus, wherein, in the alternating modus, the electric power of the polarization energy source supplied to the electric converter. On this regard, the alternating modus may be a specific inverter modus. Hence, for the purpose of the invention, the electric converter is operable in to different modi, namely, the rectifying modus in order to receive electric energy from the electric power network and to supply the at least one electrolyzing device with electrolyzing voltage, and the alternating modus, wherein the electric converter uses electric energy of the polarization energy source to supply reactive current phase-shifted with regard to the alternating voltage complying with the alternating voltage of the electric power network.

The control apparatus for controlling the electrolyzing plant may be an electronic control apparatus, a control station, or the like. The apparatus may comprise an electric hardware circuitry in order to provide the required functionality. Moreover, the apparatus may also comprise a programmable computer being configured to provide at least partially the required functionality. Also, a combination of a hardware circuitry and a programmable computer may be provided.

According to a preferred embodiment, the at least one reference value comprises a first reference value, wherein the first reference value is smaller than a rated value of the alternating voltage, wherein, for providing a low voltage comparison, the sensor signal is compared with the first reference value, wherein the electric energy is supplied to the electric power network as capacitive reactive power depending on the low voltage comparison. The first reference value may, for example, define a lower tolerance level with regard to the rated value of the alternating voltage, wherein as far as the sensor signal indicates a value of the alternating voltage higher than the first reference value, energy supply from the electrolyzing plant to the electric power network may be not necessary. On the other hand, as far as the sensor signal indicates a value of the alternating voltage that is lower than the first reference value, support of the electric power network by the electrolyzing plant may be affected by supplying capacitive reactive power to the electric power network by the specific operation of the electric converter in the alternating modus. In this case, the electric power network can be supported in order to stabilize the value of the alternating voltage. This can be achieved by providing the low voltage comparison. In the alternating modus, the electric converter may be operated such in the alternating modus that capacitive reactive power is provided.

According to another exemplary embodiment, it is proposed that the at least one reference value comprises a second reference value, wherein the second reference value is larger than the rated value of the alternating voltage, wherein, for providing an overvoltage comparison, the sensor signal is compared with the second reference value, wherein the electric energy is supplied to the electric power network as inductive reactive power depending on the overvoltage comparison. This may also support the electric power network as supplying inductive reactive power to the electric power network can support stability of the electric power network, respectively. In this regard, the electric converter may be controlled in a specific manner in the alternating modus such that the electric converter provides inductive reactive power, which will be supplied to the electric power network.

Also, a combination of the both before mentioned modes can be provided so that, by the low voltage comparison and the over voltage comparison, a tolerance band may be provided. As far as a value of the alternating voltage is inside of this tolerance band, no energy supply from the electrolyzing plant to the electric power network may be necessary. Rather, in this constitution, the determined operation of the electrolyzing plant can be established, namely, providing the electrolyzing process as determined.

According to another exemplary embodiment, it is proposed that the electric power is supplied to the electric power network during a predetermined bridging period. This exemplary embodiment considers that respective disadvantages in the power supply are usually present for a short period of time only, such as for example less than one minute, especially, less than some seconds, especially, less than 10 s, most especially, less than 3 s.

According to another exemplary embodiment, the bridging period is determined at least dependent on available energy of the polarization energy source. In this regard, the bridging period may be limited by the available energy. Also, it may be possible that the power supplied from the electric converter to the electric power network may depend on availability of energy as well as the time range of the bridging period.

According to another exemplary embodiment, the electric power supplied to the electric power network during the predetermined bridging period. In this regard, support of the electric power network by supplying energy from the electrolyzing plant may be provided only during the bridging period, which indicates a specific time range, which is preferably determined.

According yet to another exemplary embodiment, supplying the electric energy to the electric power network is automatically terminated when the bridging period is timely terminated. In this embodiment, the bridging period determines the time of supplying the electric energy to the electric power network. The bridging period in this regard may control energy supply by the electrolyzing plant to the electric power network.

According to yet another exemplary embodiment, it is proposed that the bridging period is started if the sensor signal is smaller than the first reference value as a result of the low voltage comparison, or if the sensor signal is larger than the second reference value as a result of the overvoltage comparison. Insofar, it can be achieved that the bridging period may be started if the value of the alternating voltage is not inside the above-mentioned tolerance band. In this event, support of the electric power network can be started.

According to yet another exemplary embodiment it is proposed that processing of the respective comparison is repeated during the bridging period, and supplying of the electric energy to the electric power network is terminated before the bridging period is terminated, if the sensor signal is larger than the first reference value as a result of repeating the low voltage comparison, or if the sensor signal is smaller than the second reference value as a result of repeating the over voltage comparison. In this regard, the result of the respective comparison as repeated indicates that the value of the alternating voltage may already be in the tolerance band again. Insofar, it may be not more necessary to provide electric energy from the electrolyzing plant to the electric power network. As far as the value of the alternating voltage meets the rated value or the tolerance band defined by the first and/or the second reference value, energy supply can be terminated. In this event, a further energy supply to the electric power network needs not be necessary.

According to another exemplary embodiment, it is proposed that control of the energy supplied from the electrolyzing plant to the electric power network is at least partially provided by a control station of the electric power network. The control station may be external to the electrolyzing plant. The control station may be in communication with the electrolyzing plant, especially, with the control apparatus. For example, it is possible that the electric converter may be controlled by the control station, on the one hand, and by the control apparatus of the electrolyzing plant, on the other hand. However, it is also possible that the control station communicates with the control apparatus in order to support stabilizing the electric power network.

According to another exemplary embodiment it is proposed that control of the energy supplied from the electrolyzing plant to the electric power network is at partially provided by a control station of the electric power network. The control station may be externally to the electrolyzing plant. The control station may be in communication with the electrolyzing plant. For example, it is possible that the electric converter may be controlled by the control station, on the one hand, and by the control apparatus of the electrolyzing plant, on the other hand. However, it is also possible that the control station communicates with the control apparatus in order to support stabilizing the electric power network.

For use cases or use situations which may appear in a method according to the invention and which are not explicitly described herein, it may be provided that, in accordance with the method, an error message and/or a prompt for user feedback is output and/or a default setting and/or a predetermined initial state is set. Especially, in applications or situations which might be possible but which are not specified specifically, it may be provided that a failure signal and/or a request for inputting a user confirmation can be output and/or a standard configuration and/or a predefined initial status can be suspended.

Independent of the grammatical term usage, individuals with male, female or other gender identities are included within the term.

The teaching of the present invention can be readily understood and at least some additional specific details will appear by considering the following detailed description of some exemplary embodiments in conjunction with the accompanying drawings. In the drawings, same reference characters correspond to same components and functions. In the drawings, it is shown:
FIG 1 a schematic diagram showing energy supply conditions for the electrolyzing plant;
FIG 2 a schematic diagram similar to FIG 1 showing a grid event;
FIG 3 a schematic diagram showing effects on the electrolyzing voltage caused by the grid event according to FIG 2;
FIG 4 a schematic block diagram showing a first embodiment of an energy supply circuitry of the electrolyzing plant;
FIG 5 a schematic block diagram similar to FIG 4 showing a second embodiment of an energy supply circuitry of the electrolyzing plant;
FIG 6 a schematic complex plane showing complex values of current supplied from the electrolyzing plant to the electric power network if the grid event appears; and
FIG 7 a schematic diagram showing operating areas of the electrolyzing plant with regard to a power supply from the electric power network.

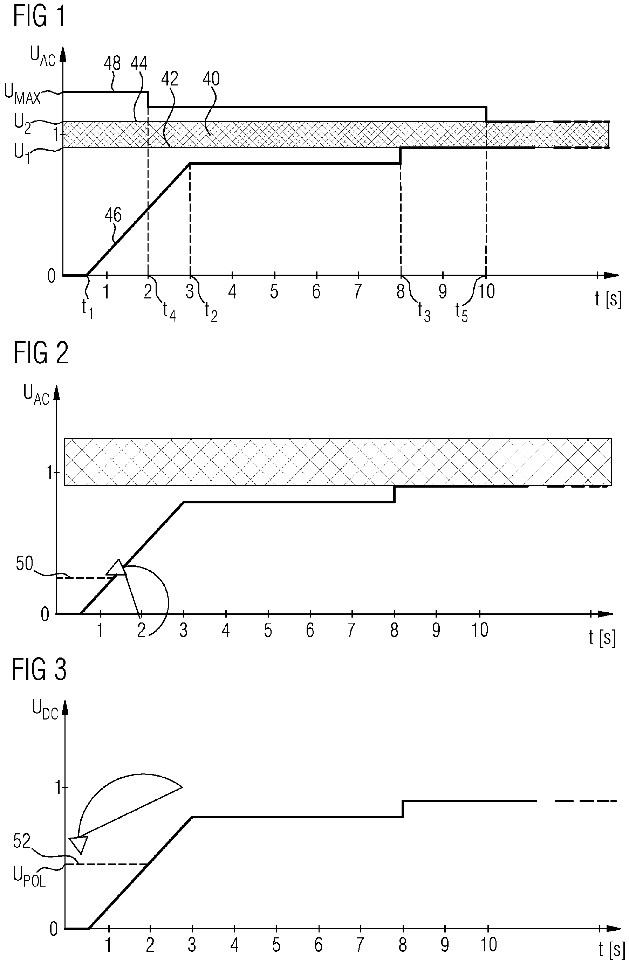

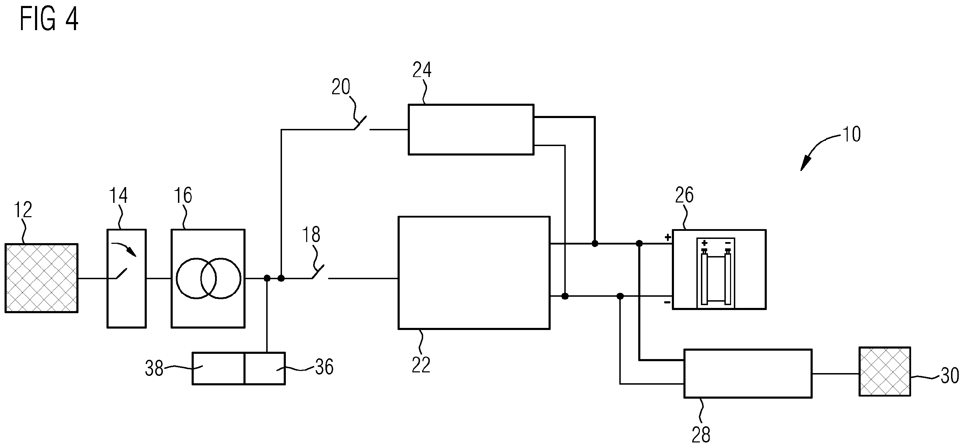

FIG 1 shows in a schematic diagram energy supply conditions for an electrolyzing plant 10 (FIG 4). The diagram according to FIG 1 has an abscissa which is allocated to a time. An ordinate of the diagram according to FIG 1 is allocated to a rms value of an alternating voltage of an electric power network 12 (FIG 4). The voltage value is normalized with regard to a rated value of the alternating voltage. The electric power network 12 is also referred to as grid in this disclosure.

As can be seen from FIG 1, a graph 42 indicates a first voltage U₁. Moreover, a graph 44 indicates a second voltage U₂. The voltage U₁ is smaller than the rated value of the alternating voltage which is indicated by the FIG 1 on the ordinate. The voltage U₂ indicates a voltage that is larger than the rated value of the alternating voltage. Both voltages U₁and U₂ define a tolerance band indicated by 40. The tolerance band 40 finds a voltage range which allows the determined operation of the electrolyzing plant 10 for providing the electrolyzing process. A voltage larger than U₂ is defined as an overvoltage condition, wherein a smaller voltage than U₁ defines a low voltage condition, such as, for example, a brownout or a blackout or the like. If a current value of the alternating voltage is not in the tolerance band 40, stable and reliable operation of the electrolyzing plant 10, especially its electrolyzing devices 26 (FIG 4), may be affected.

If the value of the alternating voltage is not within the tolerance band 40, graphs 46, 48 show conditions related to maintain the electric connection between the electric power plant 10 and the electric power network 12 or to disconnect the electrolyzing plant 10 from the electric power network 12. In this regard, graph 46 defines a low voltage condition, wherein the electric connection between the electrolyzing plant 10 and the electric power network 12 is maintained and the electrolyzing process is not stopped as far as the value of the alternating voltage is above the graph 46. As can be derived from FIG 1, the connection will be maintained as far as a blackout of the alternating voltage lasts longer than up to t₁ from appearance of the blackout event at 0. Usually, t₁ may be a half second or the like. In order to stay connected, the value of the alternating voltage must be larger than indicated by the graph 46 between the time t₁ and a time t₂. The time t₂ may be 3 seconds or the like. The connection may be also maintained during t₂ and t₃ as far as the value of the alternating voltage is larger than the respective value indicated by the graph 46. After the time t₃ the low voltage condition must be finished in order to maintain the electric connection between the electrolyzing plant 10 and the electric power network 12.

Correspondingly, the graph 48 defines a respective condition in case that an overvoltage condition appears. As can be derived from FIG 1, between 0 and a time t₄ the graph 48 defines a voltage value Uₘₐₓ. The time t₄ may be 2 seconds or the like. Uₘₐₓ is larger than U₂. At the time t₄, the graph 48 reduces its value up to a time t₅ which may be 10 s or the like. As far as the value of the alternating voltage is below the conditions indicated by graph 48, the electric connection between electrolyzing plant 10 and the electric power network 12 is maintained. Only if the value of the alternating voltage exceeds the voltage value defined by the graph 48, the electrolyzing plant 10 is disconnected from the electric power network 12. After t₅ the overvoltage condition must be finished in order to maintain the electric connection between the electrolyzing plant 10 and the electric power network 12.

FIG 2 shows a schematic diagram similar to FIG 1 showing a FRT grid event. A graph 50 shows a voltage of an electric converter 22 (FIG 4) during the grid event. As can be seen from FIG 2, during the grid event in the beginning, the voltage of the electric converter 22 is larger than the value of the alternating voltage of the electric power network 12.

FIG 3 shows a schematic diagram showing the effects on the electrolyzing voltage caused by the grid event according to FIG 2. The abscissa corresponds to the abscissa according to FIG 2. The ordinate is allocated to a normalized rated value of the electrolyzing voltage which is provided for the electrolyzing devices 26. The ordinate is allocated to the electrolyzing voltage at the electrolyzing device 26. As can be seen, the grid event may cause substantially a respective event on the supply side for the electrolyzing device 26. A graph 52 indicates a voltage which is provided by a polarization converter 28 (FIG 4). As can be seen from FIG 3, the polarization converter 28 maintains the electrolyzing voltage for the electrolyzing device 26 up to a value Uₚₒₗ as a polarization voltage.

FIG 4 shows a schematic block diagram showing a first embodiment of an energy supply circuitry of the electrolyzing plant 10. The electrolyzing plant 10 has an electrolyzing device 26, which is, in this embodiment, configured to electrolyze water in order to receive hydrogen and oxygen. In the present embodiment, it is provided that only one electrolyzing device 26 is provided. However, the invention is not limited to this embodiment so that the electrolyzing plant 10 may also have more than one electrolyzing device 26. The electrolyzing devices 26 may be in this case be electrically connected in parallel and/or in series.

The electrolyzing plant 10 has an electric converter 22 that is presently connected with the electric power network 12 in this embodiment. The electric power network 12 uses the alternating voltage, which is MV at a frequency of about 50 Hz or 60 Hz. The electric converter 22 is configured to operate in a rectifying modus during an intended electrolyzing operation of the electrolyzing plant 10. In the rectifying modus, the electric converter 22 converts the alternating voltage of the electric power network 12 into the electrolyzing voltage for supplying the electrolyzing devices 26 with electric power of the electric power network 12. In the present embodiment, the electric converter 22 is coupled with the electric power network 12 via a switch gear 14, a transformer 16 as well as a circuit breaker 18.

The electrolyzing plant 10 has a control apparatus 38 which controls the electrolyzing process and the devices and units of the electrolyzing plant 10, especially the circuit breaker 18 and the electric converter 22. The secondary side of the transformer 16 is additionally coupled to a second circuit breaker 20 which in series connected with a pre-charge circuit 24 which is also coupled with the electrolyzing device 26. The operation of the pre-charge circuit 24 is well-known to those skilled in the art which is why it is refrained from providing additional explanation. Generally, the pre-charge circuit 24 does not limit the scope of the invention.

Also, the electrolyzing plant 10 has a polarization energy source 30 which is connected via a polarization converter 28 with the electrolyzing device 26. Insofar, energy supply can be provided by the polarization energy source 30 as well as by the electric converter 22. However, the polarization energy source 30 is configured to provide energy only if the electric converter 22 does not operate in the rectifying modus. The polarization energy source 30 may have one or several secondary batteries, wind farms, solar parks, supercaps, combinations thereof and/or the like.

Considering FIG 2 and 3, in this embodiment, no active power will be supplied from the electrolyzing plant 10 to the electric power network 12 if a grid event according to FIG 2 and 3 appears as discussed above. Rather, the polarization converter 28 maintains the polarization voltage Uₚₒₗ according to graph 52 in FIG 3 during at least a portion of the grid event.

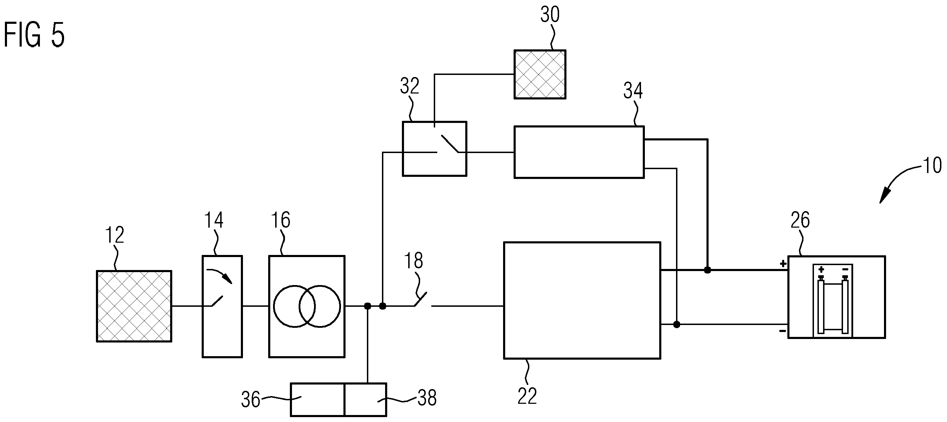

FIG 5 shows a schematic block diagram similar to FIG 4, wherein FIG 5 shows a second embodiment of an energy supply circuitry of the electrolyzing plant 10. The general concept of supplying the electrolyzing device 26 with electric energy is similar to that detailed above with regard to FIG 1 through 4, which is why it is additionally referred to these explanations. In the following, only the differences are discussed in further detail.

Deviating from the first embodiment according to FIG 4, the second embodiment according to FIG 5 has a change over switch 32 replacing the second circuit breaker 20. Moreover, the polarization energy source 30 is connected with the change over switch 32. The change over switch 32 allows connecting the pre-charged circuit 34 either with the polarization energy source 30 or with the electric power network 12 depending on its switching status. Also, similar to the second circuit breaker 20, the change over switch 32 is controlled by the control apparatus 38 with regard to its switching statuses. Moreover, the pre-charge circuit 24 is replaced by a pre-charged circuit 34, which is adapted with regard to the power which can be transferred by the pre-charge circuit 34. The pre-charge circuit 34 is capable for supplying a larger power than the pre-charge circuit 24 as detailed below. The polarization converter 28 is not further necessary in this embodiment.

In the embodiments, a voltage sensor 36 is provided detecting the alternating voltage of the electric power network 12. In these embodiments, the alternating voltage is detected on the secondary side of the transformer 16. However, in alternative embodiments, the alternating voltage may be also detected on a primary side of the transformer 16. For the purpose of the invention, this is without any effect. The voltage sensor 36 provides a voltage signal in response to the detected alternating voltage. The voltage signal is submitted to a control apparatus 38 for further processing.

In the first embodiment, the control apparatus 38 controls the circuit breakers 18, 20 at least depending on the voltage signal of the voltage sensor 38. For this purpose, among others, the control apparatus 38 provides a comparing operating, wherein the sensor signal is compared with voltage values according to graphs 46, 48 according to FIG 1.

In the second embodiment, a first reference value is provided which is presently defined by U₁. Moreover, a second reference value is provided, which is presently defined by U₂. The control apparatus 38 provides a low voltage comparison wherein the sensor signal is compared with the first reference value U₁. If the comparing result is that the sensor signal is smaller than the first reference value U₁, dependent on the comparing result, the electrolyzing device 26 and the electric converter 22 are subjected to the polarization voltage provided by the pre-charge circuit 34. For this purpose, the change over switch 32 is switched in a respective switching status where the polarization energy source 30 supplies electric energy to the pre-charge circuit 34. The electric converter 22 is caused to operate in an alternating modus instead of the rectifying modus, wherein, in the alternating modus, electric power of the polarization energy source is used to supply reactive power to the electric power network 12 by the operation of the electric converter 22. In this regard, the electric energy is supplied to the electric power network 12 as capacitive reactive power. Generally in alternative embodiments, the voltages according to the graphs 46, 48 can be used to define the first and the second reference values.

Moreover, the control apparatus 38 is configured to provide a second comparison which is an overvoltage comparison. In the overvoltage comparison, the sensor signal is compared with the second reference value U₂. If the voltage signal is larger than the second reference value U₂, the electric energy supplied to the electric power network 12 as inductive reactive power.

The second embodiment therefore allows supporting a grid event such as indicated with regard to FIG 1 through 3 by supplying prospective electric power from polarization energy source 30 to the electric power network 12. In this regard, the operation of the electric converter 22 which usually operates in a rectifying modus in order to supply the electrolyzing devices 26 with electric energy from the electric power network 12, operates now in the alternating modus so that energy can be supplied from the electrolyzing plant 10, especially its polarization energy source 30, to the electric power network 12.

Moreover, the control apparatus 38 causes the electric converter 22 to provide the electric energy as reactive power depending on the grid event. In case that the grid event is a low voltage condition, the reactive power is provided as capacitive reactive power. However, if the grid event is an overvoltage condition, the control apparatus 38 causes the electric converter 22 to provide inductive reactive power to be supplied to the electric power network 12. This kind of operation substantially allows supporting the electric power network 12 during a grid event in order to reduce effects causing the grid events and to enhance reliability of the electric power network 12.

In this regard, the electric capacity of the polarization energy source 30 as well as its rated power as well as the rated power of the pre-charge circuit 34 may be correspondingly adapted to achieve the respective effect on the electric power network 12 during a grid event. However, the tripping control according the first embodiment may be additionally also provided by the control apparatus 38. This allows ensuring a secure provision of the polarization voltage in case the control apparatus 38 has tripped because of the grid event.

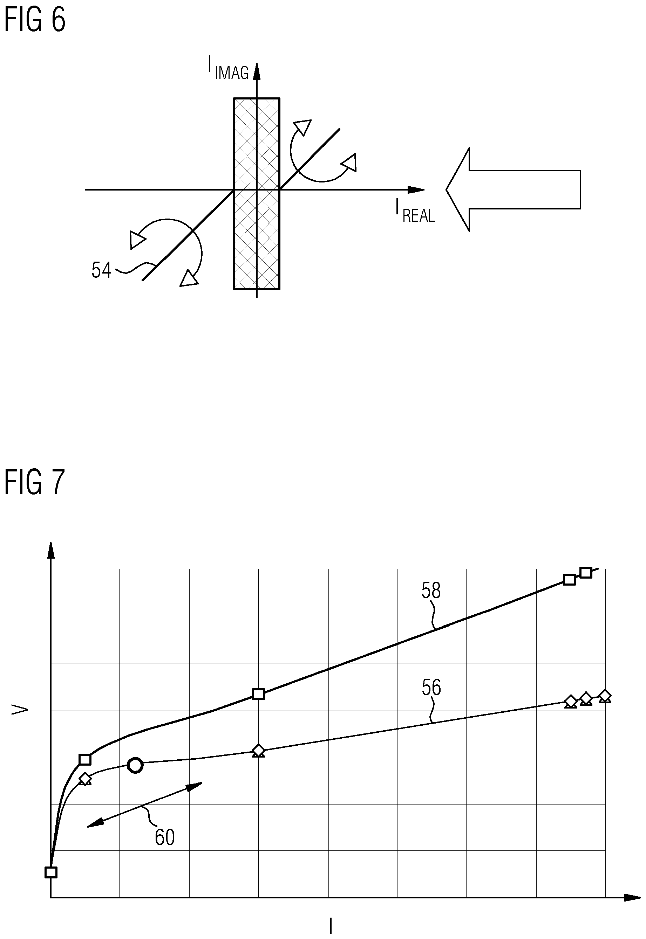

FIG 6 shows a schematic complex plane showing complex values of current provided from the electric converter 22 or the electrolyzing plant 10 to the electric power network 12, if the grid event appears. As can be seen from FIG 6, the two different grid events are shown by a graph 54. In FIG 6, an abscissa is allocated to the real part of the current, whereas the ordinate is allocated to the imaginary part of the current. FIG 6 shows the respective both conditions when the electric converter 22 operates in the alternating modus.

In a second embodiment, the pre-charge circuit 34 does not only operate as a polarization rectifier and a pre-charge circuit, but also may operate with enhanced features in order to provide FRT power for the electric converter 22. The electric converter 22 may especially be transistor-based, wherein its switching elements may comprise one or more transistors. The transistors may be field-effect transistors, bipolar transistors or the like.

FIG 7 shows a schematic diagram showing operating areas of the electrolyzing plant 10, with regard to a power supply from the electric power network 12. A graph 56 shows a dependency at a begin of life of the electrolyzing plant 10, wherein a graph 58 shows the dependency at the end of life of the electrolyzing plant 10. An arrow 60 shows a range of the polarization operation, especially with regard to a grid event. This allows active monitoring, wherein the polarization energy source and the pre-charge circuit may actively participate in stabilizing of a DC-link connected with the electrolyzing device 26 in order to protect the electrolyzing device 26 if the requirements of providing power from the electric converter 22 to the electric network 12 tend to discharge the polarization energy source 30. This functionality may be used in a lower part of the IV-curve of the electrolyzing device 26.

It is an advantage of the invention that no extra equipment be necessary for supporting or stabilizing the electric power network 12. Only the polarization energy source 30 may be used which is already usually existing in an electrolyzing plant. This power can preferably be used for FRT events which, in many cases, may not coincide with an energy consume for the electrolyzing process.

The before-mentioned embodiments shall only be understood to explain the invention in further detail and not to limit the scope of the claims.

## Claims

1. A method for controlling an electrolyzing plant (10) having at least one electrolyzing device (26), especially for electrolyzing of water by providing an electrolyzing process, wherein the method comprises:
- converting an alternating voltage of an electric power network (12) into an electrolyzing voltage for supplying the at least one electrolyzing device (26) with electric power of the electric power network (12), wherein converting is affected by an electric converter (22) connected with the electric power network (12), which electric converter (22) operates in a rectifying modus during an intended electrolyzing operation of the electrolyzing plant (10),
- subjecting the at least one electrolyzing device (26) to a polarization voltage for a predetermined period at off-time of the intended electrolyzing operation, wherein the polarization voltage is provided by a polarization energy source (30) of the electrolyzing plant (10),
- detecting the alternating voltage with a voltage sensor (36) providing a sensor signal, and
- comparing the sensor signal with at least one reference value,
**characterized in that**,
- dependent on a comparing result, subjecting the at least one electrolyzing device (26) and the electric converter (22) to the polarization voltage, and
- operating the electric converter (22) in an alternating modus, wherein, in the alternating modus, electric power of the polarization energy source (30) is supplied to the electric converter (22) in order to allow the electric converter (22) supplying reactive power to the electric power network (12) by the operation of the electric converter (22).

2. The method according to claim 1, **characterized in that** the at least one reference value comprises a first reference value, wherein the first reference value is smaller than a rated value of the alternating voltage, wherein, for providing a low voltage comparison, the sensor signal is compared with the first reference value, wherein the electric energy is supplied to the electric power network (12) as capacitive reactive power depending on the low voltage comparison.

3. The method according to any one of the preceding claims, **characterized in that** the at least one reference value comprises a second reference value, wherein the second reference value is larger than the rated value of the alternating voltage, wherein, for providing an overvoltage comparison, the sensor signal is compared with the second reference value, wherein the electric energy is supplied to the electric power network (12) as inductive reactive power depending on the overvoltage comparison.

4. The method according to any one of the preceding claims, **characterized in that** the electric power is supplied to the electric power network (12) during a predetermined bridging period.

5. The method according to claim 4, **characterized in that** the bridging period is determined at least dependent on available energy of the polarization energy source.

6. The method according to claim 4 or 5, **characterized in that** supplying the electric energy to the electric power network (12) is automatically terminated when the bridging period is timely terminated.

7. The method according to any one of the preceding claims 4 through 6, **characterized in that** the bridging period is started if the sensor signal is smaller than the first reference value as a result of the low voltage comparison, or if the sensor signal is larger than the second reference value as a result of the overvoltage comparison.

8. The method according to claim 7, **characterized in that** processing of the respective comparison is repeated during the bridging period, and supplying of the electric energy to the electric power network (12) is terminated before the bridging period is terminated, if the sensor signal is larger than the first reference value as a result of repeating the low voltage comparison, or if the sensor signal is larger than the second reference value as a result of repeating the overvoltage comparison.

9. A control apparatus (38) for an electrolyzing plant (10) having at least one electrolyzing device (26), especially for electrolyzing of water by providing an electrolyzing process, wherein the control apparatus (38) is configured to:
- control an electric converter (22) of the electrolyzing plant (10), wherein the electric converter (22) is configured to be connected with the electric power network (12), with regard to conversion an alternating voltage of the electric power network (12) into an electrolyzing voltage for supplying the at least one electrolyzing device (26) with electric power of the electric power network (12), wherein the electric converter (22) is configured to operate in a rectifying modus during an intended electrolyzing operation of the electrolyzing plant (10),
- cause subjecting the at least one electrolyzing device (26) to a polarization voltage at off-time of the intended electrolyzing operation for a predetermined period, wherein the polarization voltage is provided by a polarization energy source (30) of the electrolyzing plant (10),
- cause detecting the alternating voltage by a voltage sensor (36) providing a sensor signal, and
- cause comparing the sensor signal with at least one reference value,
**characterized in that**
the control apparatus (38) is further configured to
- cause, dependent on a comparing result, subjecting the at least one electrolyzing device (26) and the electric converter (22) to the polarization voltage, and
- cause the electric converter (22) operating in an alternating modus, wherein, in the alternating modus, electric power of the polarization energy source (30) is supplied to the electric converter (22) in order to allow the electric converter (22) supplying reactive power to the electric power network (12) by the operation of the electric converter (22).

10. An electrolyzing plant (10) having:
- at least one electrolyzing device (26), especially for electrolyzing of water by providing an electrolyzing process,
- an electric converter (22) that is configured to be connected with an electric power network (12) using an alternating voltage, wherein electric converter (22) is configured to convert the alternating voltage of the electric power network (12) into an electrolyzing voltage for supplying the at least one electrolyzing device (26) with electric power of the electric power network (12), wherein the electric converter (22) is configured to operate in a rectifying modus during an intended electrolyzing operation of the electrolyzing plant (10),
- a polarization energy source (30) configured to provide a polarization voltage to the at least one electrolyzing device (26) at off-time of the intended electrolyzing operation for a predetermined period,
- a voltage sensor (36) for detecting the alternating voltage of the electric power network (12) and for providing a sensor signal, and
- a control apparatus (38) at least configured to control the electric converter (22), and to compare the sensor signal with at least one reference value,
**characterized in that**
the control apparatus (38) is configured according to claim 9.
